# EUROPEAN PATENT APPLICATION

(11) **EP 2 740 978 A1**
(43) Date of publication of application: **11.06.2014**
(21) Application number: 12425194.3
(22) Date of filing: 07.12.2012
(51) Int. Cl.: F16K 5/06

(54) **Energy saving control valve**

(71) Applicant: Pibiviesse S.r.l., 20014 Nerviano MI (IT)
(72) Inventor: Corbetta, Antonio, 22071 Cadorago (CO) (IT)
(74) Representative: Bonatto, Marco

(57) **Abstract**

The invention concerns an energy recovery control valve (1), comprising a valve body (3) and a rotating plug (5) contained in the valve body. In the valve (1), a through duct (7) is arranged suitable for allowing a fluid to be controlled, to pass through the same valve (1). In the rotating plug (5) a movable passage is provided through which the fluid to be controlled can pass through the rotating plug. The valve (1) comprises a transmission system (9) in turn comprising a mechanical power take-off (11) accessible from outside the control valve itself. A rotor (13) is housed in the movable passage (50) arranged for being driven by the fluid to be controlled and in turn for driving the transmission system (9), which is arranged for transmitting the mechanical energy of the fluid to be controlled, transferred to the rotor (13), outside the control valve through the mechanical power take-off (11).

## Description

### Field of the invention

The present invention concerns an energy recovery control valve for fluids, such as for example water, liquid or gas hydrocarbons, liquids or gas in general or liquid/gas mixtures, liquid/solid mixtures like for example muds or colloidal mixtures, that are capable of recovering part of the energy of the fluid passing through the valve itself.

### State of the art

When a ball valve of the known type is used to regulate the flow-rate of a fluid, normally such a regulation is made with suitable fixed elements inside the ball itself. This type of valve is used for example to regulate large flow-rates of fluid, to manage reductions of process pressure or temperatures, to manage fluids containing powders and solids without completely obstructing the passage, to control the level of tanks.
Such fixed elements, and the ball itself, regulate the flow of fluid substantially restricting it, or in any case dissipating its mechanical energy.
A purpose of the present invention is to provide a control valve that is capable of regulating the flow of a fluid by recovering a greater fraction of the energy of the fluid itself with respect to known types of control valves, or rather with a greater efficiency with respect to known types of control valves.

### Summary of the invention

Such a purpose is reached, according to the present invention, with an energy recovery control valve having the features according to claim 1.
Further characteristics of the device are object of the dependent claims.
The advantages that can be achieved with the present invention shall become clearer, to a man skilled in the art, from the following detailed description of some particular non limiting embodiments, illustrated with reference to the following schematic figures.

### List of the Figures

Figure 1 shows a side view, partially in section according to the section plane II-II, of an energy recovery control valve according to a first particular embodiment of the invention, in a completely open position;
Figure 2 shows a front view, partially in section according to the section plane I-I, of the valve of Figure 1;
Figure 3 shows a side view, partially in section according to the section plane IV-IV, of an energy recovery control valve according to a second particular embodiment of the invention, in a completely open position;
Figure 4 shows a front view, partially in section according to the section plane III-III, of the valve of Figure 3.

### Detailed description

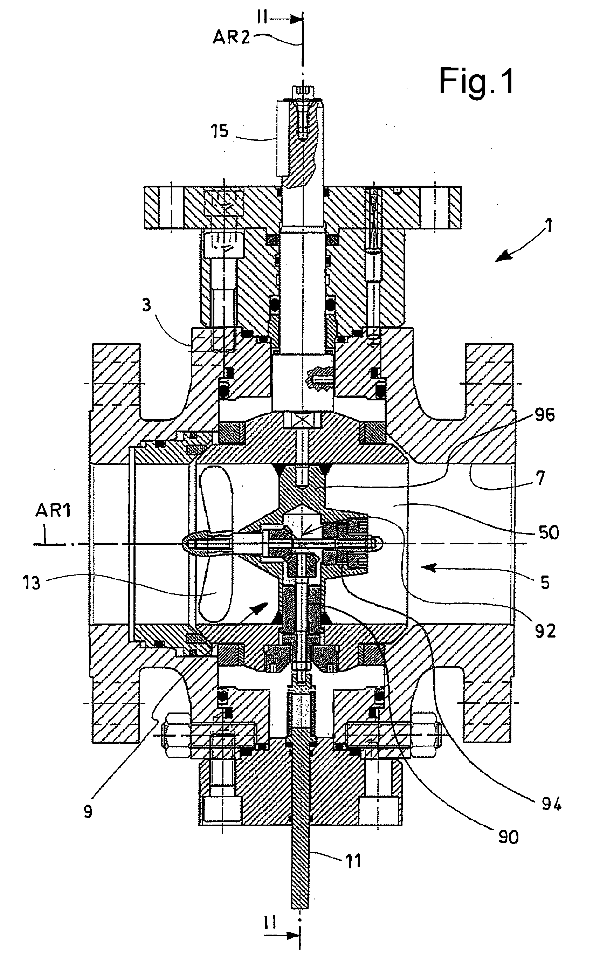

Figures 1-2 relate to an energy recovery control valve for fluids according to a first particular embodiment of the invention, indicated with the overall reference numeral 1. The valve 1 comprises a valve body 3 and a rotating plug 5 that is housed in the valve body 3. In the valve 1, a through duct 7 is arranged, suitable for allowing a fluid to be controlled - such a fluid being for example water, liquid or gas hydrocarbons, liquids or gases in general or liquid/gas mixtures, liquid/solid mixtures like for example muds or colloidal mixtures- to pass through the valve 1 itself.

In the rotating plug 5 a movable passage 50 is provided forming part of the through duct 5 and through which the fluid to be controlled can pass through the rotating plug 5 itself. The through duct 7 and/or the movable passage 50 can have for example rectilinear axes and pass from side to side of the valve body 3 or of the rotating plug 5, respectively, in particular its spherical portion. The valve body 3, the rotating plug 5 and the rotor 13 can be made for example from a suitable metal, for example the valve body 3 can be made from cast iron and the rotating plug 5 and the rotor 13 can be made from steel.

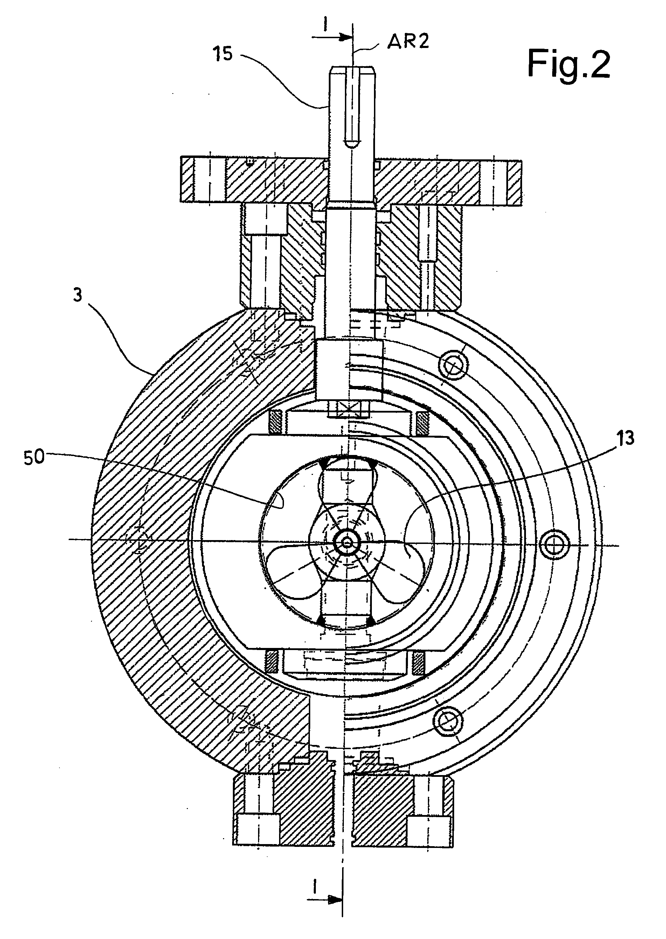

According to one aspect of the invention, the control valve 1 comprises a transmission system 9 in turn comprising a mechanical power take-off 11 that is accessible from outside of the control valve 1 itself, and in particular from outside of the valve body 3; moreover, again according to one aspect of the invention, in the movable passage 50 a rotor 13 is arranged for being driven by the fluid to be controlled and in turn driving the transmission system 9, which is arranged for transmitting the mechanical energy transferred from the fluid to be controlled to the rotor 13 to the outside of the control valve 1, through the mechanical power take-off 11.
Preferably the rotating plug 5 is of the ball type, i.e. its overall shape is that of a solid of revolution that forms two spherical shells -for example, lower and upper, opposite one another- of the same spherical surface (Figures 1, 2). This type of plug makes it possible to optimise the performance of regulation making it possible to obtain high pressure reduction when the passage is slightly open and, *vice versa,* low reduction when the passage is more open. The pressure reduction can be a function of the angle of aperture of the plug.

The rotor 13 can comprise a propeller with blades that extend radially with respect to the rotation axis AR1 of the propeller itself (Figures 1, 2).
Preferably, the rotor 13 is suitable for rotating on itself around a first rotation axis AR1, substantially parallel, or in any case longitudinal with respect to the movable passage section 50 adjacent to the rotor 13 itself. In the present description, two elements are considered to be longitudinal or transverse to one another if they are inclined with respect to one another by an angle that is smaller or greater than or equal to 45°, respectively.
Again as shown in Figures 1, 2, the rotor 13 is preferably suitable for rotating on itself around a first rotation axis AR1 that is substantially parallel, or in any case longitudinal to the average, total or prevalent direction, of the flow of fluid to be controlled in the movable passage section 50 adjacent to the same rotor.
The rotating plug 5 is arranged for opening, closing or reversibly restricting the through duct 7 by rotating on itself around a second rotation axis AR2. Again as shown in Figures 1, 2, the rotor is preferably arranged for rotating on itself around a first rotation axis AR1 that is substantially perpendicular, or in any case transversal to the second rotation axis.

The mechanical power take-off 11 can be made up of or can comprise a rotating shaft, projecting from the valve body 3 and suitable for driving for example electrical generators or other machines or mechanisms arranged downstream (Figures 1,2 ); in other non-shown embodiments however, the mechanical power take-off can for example comprise or be made up of a rotating shaft that is accessible from outside of the valve body 3 without however projecting from it.

The transmission system 9 can comprise:
- a first transmission shaft 90 that is arranged for rotating around a third rotation axis coinciding with, parallel or in any case longitudinal to the second rotation axis AR2;
- a transmission joint 92 arranged for transmitting the movement of the rotor 13 to the first transmission shaft 90.
As shown in Figure 1, the transmission joint 92 can comprise or consist of, for example, a pair of toothed mitre wheels or other more efficient systems.

As shown in Figure 1, advantageously, the transmission joint 92, the first 90 and the second transmission shaft 94 are housed in a suitable casing 96 which advantageously has a substantially tapered or in any case fluid-dynamically optimised shape, so as to reduce head losses of the flow to be regulated that flows on the rotor 13 and the joint 92 themselves and therefore increase the performance of the rotor 13 and of the transmission system 9 itself. The fluid-dynamic casing 96 can be integral with the rotating plug and in particular rigidly fixed to the walls of the movable passage 50, for example by means of two columns or pins that are welded to the walls of the movable passage 50. Advantageously the valve 1, and more in particular the transmission system 9 are arranged so that the mechanical power take-off 11 is capable of transmitting a mechanical power that is equal to or greater than 0.5 kW, preferably equal to or greater than 1 kW and more preferably equal to or greater than 2 kW. Advantageously, the valve 1, and more in particular the transmission system 9 are arranged so that the mechanical power take-off 11 is capable of transmitting a torque that is equal to or greater than 50 Nm, preferably equal to or greater than 100 Nm, more preferably equal to or greater than 300 Nm and yet more preferably equal to or greater than 700 Nm. Advantageously, the valve 1, and more in particular the transmission system 9 are arranged so as to have an efficiency that is preferably greater than 20%, and for example comprised between 20-80%, where the efficiency can be expressed by the ratio between the power available at the mechanical power take-off 11 and the maximum mechanical power that can theoretically be obtained from the fluid to be controlled immediately upstream of the rotor 13, or in any case by the fluid to be controlled which from upstream enters the valve 1, considering for example the sum of the kinetic, potential and pressure energy, of the fluid to be controlled coming from upstream.
The valve 1 can moreover comprise a regulating shaft 15 which makes it possible to rotate the rotating plug 5 on itself. The regulating shaft 15 can be fixedly attached and coaxial with the rotating plug 5, and can project out from the valve body 3 (Figure 1).

The operation and some examples of use will now be described, of the valve 1 previously described.
By rotating the regulating shaft 15 the rotating plug 5 can be moved from a first completely closed position, to a second partially open position to a third completely open position.
In the completely closed position the open ends of the movable passage 50 do not face the open ends of the sections of the through duct 7 formed directly in the valve body 3, for example because the movable passage 50 is substantially perpendicular to the axis of the sections of the through duct 7 obtained directly in the valve body 3. In the partially open position the open ends of the movable passage 50 only partially face the open ends of the sections of the through duct 7 formed directly in the valve body 3, whereas in the completely open position the open ends of the movable passage 50 completely face the open ends of the sections of the through duct 7 formed directly in the valve body 3, for example (Figures 1, 2) because the movable passage 50 is substantially coaxial with respect to the sections of the through duct 7 obtained directly in the valve body 3.

In the completely closed position the through duct 7 and the movable passage 50 are not substantially passed through by a flow of fluid to be regulated, the rotor 13 and the outlet shaft 11 are substantially stopped or in any case at minimum revs. In the completely open position the through duct 7 and the movable passage 50 are passed through by the maximum flow possible of fluid to be regulated, the rotor 13 and the outlet shaft 11 rotate at maximum revs or they dispense the maximum torque foreseen. In the partially open position the through duct 7 and the movable passage 50 are passed through by a flow that is intermediate with respect to those of the completely closed position and completely open position, and correspondingly the rotor 13 and the outlet shaft 11 rotate at an intermediate number of revs or they dispense a torque that is neither minimum nor maximum. In any case, in the partially and completely open positions the rotor 5 and the transmission system 9 make it possible to recover part of the mechanical energy of the fluid to be regulated that passes through the valve 1, and in particular flows through the through duct 7 and the movable passage 50.

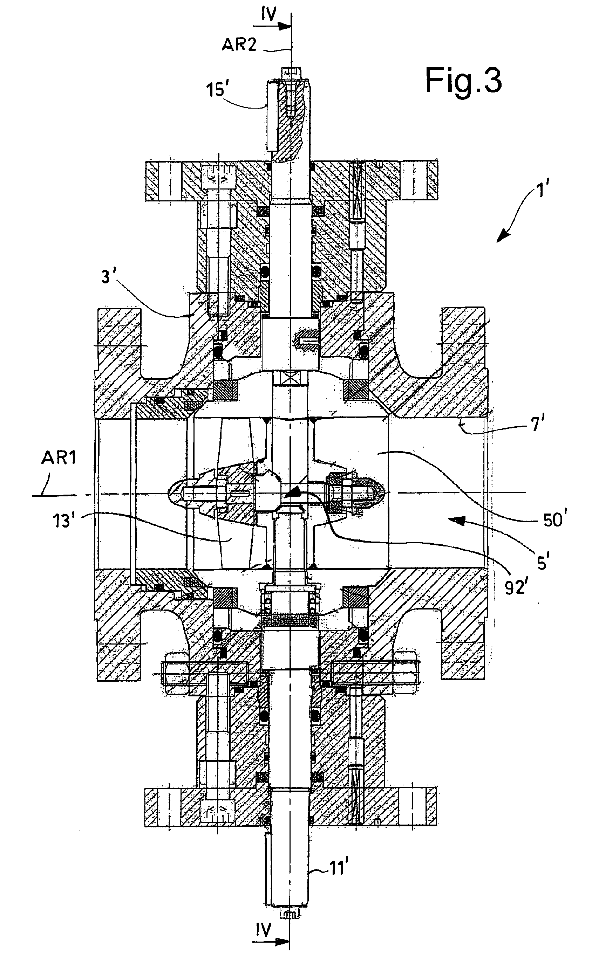

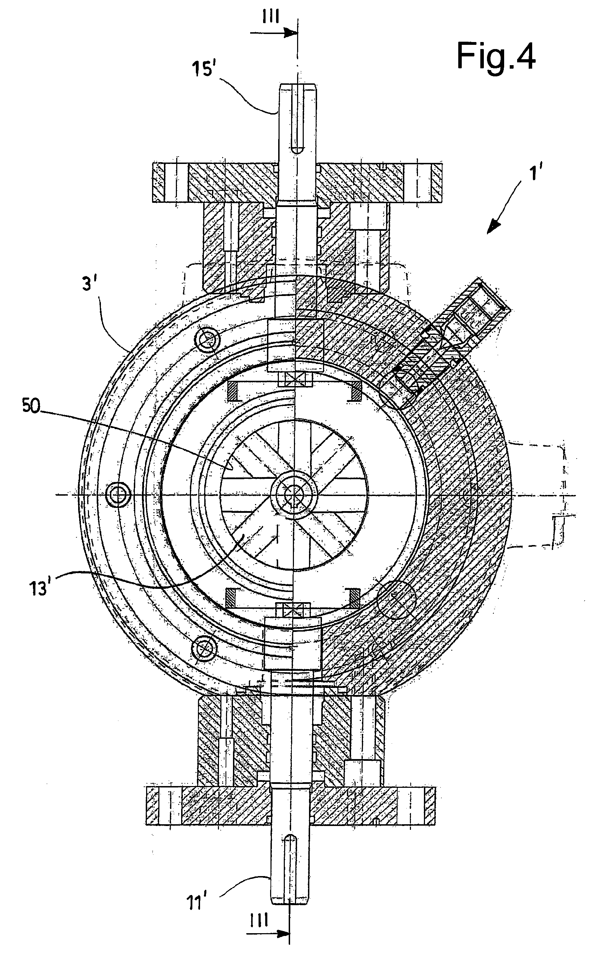

Figures 3, 4 refer to an energy recovery control valve for fluids according to a second particular embodiment of the invention, indicated with the overall reference numeral 1'.

The embodiments previously described can undergo different modifications and variations without for this reason departing from the scope of protection of the present invention. For example a valve according to the invention may not only be a control valve but also a shut-off valve. The rotating plug 5 may not only be of the ball type, but also of the disc or rotary drum type. The rotor 13 may not only be a propeller with blades arranged radially with respect to the rotation axis, but also for example, and more in general, a radial rotor shaped in various ways, in which the fluid moves away from the rotor itself with a direction that is mainly or exclusively radial, or an axial rotor shaped in various ways, in which the fluid moves away from the rotor itself with a direction that is mainly or exclusively parallel to the rotation axis of the rotor. The transmission joint 92 may comprise or consist of, not only a pair of toothed miter wheels, but for example also a spur gear, a cardan or constant velocity joint for example with spheres, a hydraulic joint. Moreover, all the details can be replaced by technically equivalent elements. For example the materials used, as well as the dimensions, may be any according to the technical requirements. An expression of the type "A *comprises* B, C, D" or "A *is formed* by B, C, D" should be taken to also comprise and describe the particular case in which "A *is made up of* B, C, D". The examples and the lists of possible variants of the present application should be taken as non-exhaustive lists.

## Claims

1. An energy recovery control valve (1), comprising a valve body (3) and a rotating plug (5) contained in the valve body, and wherein:
- in the valve (1), a through duct (7) is arranged suitable for allowing a fluid to be controlled, to pass through the same valve (1);
- in the rotating plug (5), a movable passage (50) is arranged forming part of the through duct (7) through which the fluid to be controlled can pass through the rotating plug;
- the control valve (1) comprises a transmission system (9) in turn comprising a mechanical power take-off (11) accessible from outside the control valve itself;
- a rotor (13) is housed in the movable passage (50), arranged for being driven by the fluid to be controlled and in turn for driving the transmission system (9), which is arranged for transmitting the mechanical energy of the fluid to be controlled, transferred to the rotor (13), outside the control valve through the mechanical power take-off (11).

2. The valve (1) according to claim 1, wherein the rotor (13) is suitable for rotating around a first rotation axis (AR1) substantially parallel, or in any case longitudinal, to the movable passage section (50) adjacent to the same rotor.

3. The valve (1) according to claim 1, wherein the rotor (13) is suitable for rotating on itself around a first rotation axis (AR1) substantially parallel, or in any case longitudinal, to the average, total or prevalent direction of the flow of the fluid to be controlled in the movable passage section (50) adjacent to the same rotor.

4. The valve (1) according to claim 1, wherein the rotating plug (5) is arranged for reversibly opening, closing or restricting the through duct (7) by rotating on itself around a second rotation axis (AR2), and the rotor (13) is arranged for rotating on itself around a first rotation axis (AR1) substantially perpendicular, or in any case transversal to the second rotation axis (AR2).

5. The valve (1) according to claim 1, wherein the mechanical power take-off (11) comprises a rotating shaft.

6. The valve (1) according to claim 1, wherein the transmission system (9) comprises:
- a first transmission shaft (90) suitable for rotating around a third rotation axis coinciding with, parallel or in any case longitudinal to the second rotation axis (AR2);
- a transmission joint (92) arranged for transmitting the movement of the rotor (13) to the first transmission shaft (AR1).

7. The valve (1) according to claim 6, wherein the transmission joint (92) comprises one or more elements selected from the following group: a gear in turn comprising a pair of toothed wheels, preferably mitre toothed wheels, a cardan joint, a constant-velocity joint such as a ball-joint, a hydraulic joint.

8. The valve (1) according to claim 1, wherein the rotating plug (5) is selected from the following group: a ball-, disc-, drum- plug.

9. The valve (1) according to claim 1, wherein the rotor (13) comprises a propeller with blades that extend radially with respect to the rotation axis of the propeller itself.

10. An energy recovery system, comprising an energy recovery control valve (1) having the characteristics according to claim 1, and an electric energy generator activated by the rotor (13), preferably by means of the transmission system (9).
